# EUROPEAN PATENT SPECIFICATION

(11) **EP 2 149 637 B1**
(45) Date of publication and mention of the grant of the patent: **23.11.2016**
(21) Application number: 08764539.6
(22) Date of filing: 22.05.2008
(51) Int. Cl.: D06M 15/507, B29B 15/14, C03C 25/10, C08J 5/24, B29B 15/12, B29K 67/00, C08J 5/06, C08G 63/672, D06M 13/148, D06M 13/192, C08L 67/02

(54) **FIBER SIZING AGENT**
FASERSORTIERVORRICHTUNG
AGENT D'ENCOLLAGE DE FIBRE

(30) Priority: 22.05.2007 JP 2007135858; 31.03.2008 JP 2008089479
(43) Date of publication of application: 03.02.2010
(73) Proprietor: Sanyo Chemical Industries, Ltd., Kyoto-shi Kyoto 605-0995 (JP)
(72) Inventor: INOUE, Masahito, Kyoto-shi Kyoto 605-0995 (JP)
(74) Representative: Becker, Eberhard
(86) International application number: PCT/JP2008/059478
(87) International publication number: WO 2008/143325

(56) References cited:
- JP-A- 2001 316 980
- JP-A- 2002 339 246
- JP-A- 2005 105 481
- JP-B2- 2 957 406
- US-A- 4 904 818

## Description

### BACKGROUND OF THE INVENTION

### 1. Field of the Invention

The present invention generally relates to a sizing agent for fibers.

### 2. Description of Related Art

Now, fiber-reinforced composite materials formed by complexing fibers in a matrix resin, such as, epoxy resin, unsaturated polyester resin, and phenolic resin, are widely used in the fields of sports, entertainment, and aerospace, etc.. The fiber useful in these composite materials includes organic fibers, such as polyamide fiber, aramid fiber, polyethylene fiber, and polyester fiber, and inorganic fibers, etc., such as glass fiber, and carbon fiber, etc.. These fibers are generally manufactured in the form of filaments or tow, so as to be further processed into flake, strip, filament winding, woven fabric, or chopped fiber stretched in a direction for use. Because the fiber contacts various guiding elements repeatedly during processing, the fiber is required to have rub resistance, so as to avoid the presence of nap and broken end when being rubbed. Generally, a sizing agent for fibers of filaments or tow is generally used for avoiding the generation of nap and broken end. Furthermore, in order to obtain a high quality product, a property (i.e. spredability) in which a fiber can be thinned and extended without gaps at a weak contact pressure is required. The sizing agent for fibers is typically in a form of an emulsion or a solution, and the resin contained therein is preferably polyurethane resin, epoxy resin, polyester resin, and a combination thereof. For example, in Japanese Patent No. 2957406 and Japanese Patent Publication No. 1982-49675, a condensate (polyester resin) of an unsaturated diprotic acid and an alkylene oxide adduct of bisphenol is used in combination with an epoxy resin, etc... However, the sizing agent containing polyester resin disclosed in Japanese Patent No. 2957406 and Japanese Patent Publication No. 1982-49675 has insufficient emulsification stability and insufficient sizing property. If the emulsification condition of the sizing agent is unstable, the problem of demulsification occurs due to the temperature or mechanical shear in the processing of the fiber, and occasionally, the treatment of the fiber with the sizing agent is not carried out at all.

### SUMMARY OF THE INVENTION

In order to solve the problem of the emulsification stability and the sizing property, the inventors studied on the improvement of the hydrophilicity of the polyester resin. From the results, it is found that, for example, the emulsification stability can be improved by increasing the added moles of alkylene oxide in the diol component, i.e. alkylene oxide adduct of the bisphenol, used in the polyester resin. However, the sizing property is nearly unimproved, and the adhesive property of the sizing agent with the matrix resin decreases. Accordingly, the present invention is directed to a sizing agent for fibers, and the sizing agent contains a polyester resin, which is capable of improving the emulsification stability and sizing property, while maintaining the adhesive property with the matrix resin.

The present invention is achieved by the hard work directed to the problems above. That is, the present invention provides a sizing agent for fibers, a fiber bundle, a fiber product, a prepreg, and a shaped body. The sizing agent for fibers is an aqueous solution or an aqueous emulsion containing a polyester resin (A) which satisfies all the following conditions (i)-(iv) and an aqueous medium:
(i) that the polyester resin (A) is made from a dicarboxylic acid or its anhydride (a) and diols (b);
(ii) that at least one of diols (b) is diol (b1) that has 4.5-60 contiguous oxyethylene groups on average;
(iii) that the weight percent of the average 4.5-60 contiguous oxyethylene groups in the polyester resin (A) is 25-50 wt%; and
(iv) that a mixture of 10 parts by weight of the polyester resin (A) and 90 parts by weight of water forms an uniform transparent solution or an uniform emulsion at 25°C. The fiber bundle is obtained by treating at least one fiber selected from the group consisting of glass fiber, carbon fiber, aramid fiber, ceramic fiber, metal fiber, mineral fiber, rock fiber, and slug fiber with the sizing agent for fibers. The fiber product is made from the fiber bundle. The prepreg is formed with the fiber bundle or the fiber product as a reinforcing fiber and a thermoplastic or thermosetting resin as a matrix. The shaped body is made by shaping and hardening the prepreg.

The sizing agent for fibers of the present invention can improve the emulsification stability and sizing property while maintaining the adhesive property with the matrix resin.

### DESCRIPTION OF THE EMBODIMENTS

In the present invention, the example of dicarboxylic acid or its anhydride (a) forming the polyester resin (A) includes aliphatic dicarboxylic acid (a1), aromatic dicarboxylic acid (a2), and anhydrides thereof, etc..

The example of aliphatic dicarboxylic acid (a1) includes chain saturated dicarboxylic acid (a11), chain unsaturated dicarboxylic acid (a12), alicyclic dicarboxylic acid (a13), and dimer acid (a14), etc..

The example of chain saturated dicarboxylic acid (a11) includes straight-chain or branched-chain saturated dicarboxylic acid having 2-22 carbon atoms, etc. (e.g. oxalic acid, malonic acid, succinic acid, glutaric acid, methylsuccinic acid, ethylsuccinic acid, dimethylmalonic acid, α-methylglutaric acid, β-methylglutaric acid, 2,4-diethylglutaric acid, isopropylmalonic acid, adipic acid, pimelic acid, suberic acid, azelaic acid, sebacic acid, decanedicarboxylic acid, undecanedicarboxylic acid, dodecanedicarboxylic acid, tridecanedicarboxylic acid, tetradecanedicarboxylic acid, hexadecanedicarboxylic acid, octadecanedicarboxylic acid, elcosanedicarboxylic acid, decylsuccinic acid, dodecylsuccinic acid, and octadecylsuccinic acid, etc.).

The example of chain unsaturated dicarboxylic acid (a12) includes straight-chain or branched-chain unsaturated dicarboxylic acid having 4-22 carbon atoms, etc. (e.g. maleic acid, fumaric acid, citraconic acid, mesaconic acid, dodecenylsuccinic acid, pentadecenylsuccinic acid, and octadecenylsuccinic acid.).

The example of alicyclic dicarboxylic acid (a13) includes alicyclic dicarboxylic acid having 7-14 carbon atoms, etc. (e.g. 1,3-cyclopentanedicarboxylic acid or 1,2-cyclopentanedicarboxylic acid, 1,2-cyclohexanedicarboxylic acid, 1,3-cyclohexanedicarboxylic acid or 1,4-cyclohexanedicarboxylic acid, 1,2-cyclohexanediacetic acid, 1,3-cyclohexanediacetic acid or 1,4-cyclohexanediacetic acid, and dicyclohexyl -4,4'-dicarboxylic acid, etc.).

The example of dimer acid (a14) includes, for example, the dimmer of chain unsaturated carboxylic acid having 8-24 carbon atoms, etc. (e.g. oleic acid, linoleic acid, and linolenic acid, etc.).

The example of aromatic dicarboxylic acid (a2) includes aromatic dicarboxylic acid having 8-14 carbon atoms, etc. (e.g. terephthalic acid, isophthalic acid, phthalic acid, phenylmalonic acid, phenylsuccinic acid, β-phenylglutaric acid, α-phenyladipic acid, β-phenyladipic acid, biphenyl-2,2'-dicarboxylic acid and biphenyl-4,4'-dicarboxylic acid, naphthalenedicarboxylic acid, sodium 5-sulfoisophthalic acid, and potassium 5-sulfoisophthalic acid, etc.).

The example of anhydride of the dicarboxylic acid includes the anhydride of (a1) or (a2), such as, succinic anhydride, maleic anhydride, and phthalic anhydride, etc..

The dicarboxylic acid and its anhydride can be used alone, or in combination of two or more. In view of the sizing property, the preferred dicarboxylic acid and its anhydride are chain saturated dicarboxylic acid (a11), chain unsaturated dicarboxylic acid (a12), and aromatic dicarboxylic acid (a2); the more preferred dicarboxylic acid and its anhydride are oxalic acid, malonic acid, succinic acid, adipic acid, sebacic acid, maleic acid, fumaric acid, terephthalic acid, isophthalic acid, and phthalic acid, and the particularly preferred ones are adipic acid, maleic acid, fumaric acid, terephthalic acid, isophthalic acid, and a combination of two or more thereof.

The example of diol (b) in forming the polyester resin (A) of the present invention includes aliphatic alkanediol and alkylene oxide (referred to as AO hereinafter) adduct thereof, alicyclic diol and AO adduct thereof, AO adduct of primary amine, and AO adduct of diphenol containing aromatic ring, etc..

The example of aliphatic alkanediol includes aliphatic alkanediol having 2 to 16 carbon atoms, such as ethylene glycol, 1,2-propylene glycol, 1,3-propylene glycol, 1,4-butanediol, 1,6-hexanediol, octanediol, decanediol, dodecanediol, hexadecanediol, neopentyl glycol, and 2,2-diethyl-1,3-propanediol, etc.. The example of AO adduct of aliphatic alkanediol includes adduct of the diol with AO having 2 to 4 carbon atoms. The example of AO having 2 to 4 carbon atoms includes, for example, ethylene oxide (referred to as EO hereinafter), 1,2-propylene oxide (referred to as PO hereinafter), 1,2-butylene oxide, and 1,4-butylene oxide (referred to as BO hereinafter), etc.. These AOs can be used in combination of two or more; and in this case, the bonding type can be block addition, random addition, or a combination thereof. The addition moles of AO per molecule of aliphatic alkanediol are typically 1-120 moles.

The example of alicyclic diol includes alicyclic diol containing 4 to 16 carbon atoms, such as, 1,4-cyclohexanediol, 1,4-cyclohexanedimethanol, and hydrogenated bisphenol A, etc.. The example of AO adduct of alicyclic diol includes adduct of alicyclic diol with AO having 2-4 carbon atoms.

The example of primary amine in the AO adduct of primary amine includes primary amine having 1-18 carbon atoms, such as, methylamine, ethylamine, propylamine, butylamine, octylamine, decylamine, and dodecylamine, etc.. The example of AO adduct of primary amine includes an adduct of primary amine with AO having 2 to 4 carbon atoms.

The example of diphenol containing aromatic ring in the AO adduct of diphenol containing aromatic ring includes bisphenol A, bisphenol S, cresol, and hydroquinone, etc.. The example of the AO adduct of diphenol containing aromatic ring includes an adduct of diphenol containing aromatic ring with AO having 2 to 4 carbon atoms.

In view of the emulsification stability of the sizing agent, the preferred diols (b) are aliphatic alkanediol and AO adduct thereof, AO adduct of alicyclic diol, AO adduct of primary amine, and AO adduct of biphenol containing aromatic ring; and more preferred diols (b) are aliphatic alkanediol and AO adduct thereof, AO adduct of biphenol containing aromatic ring, and a combination of two or more thereof.

Furthermore, at least one diol of the one or two or more diol (b) being used must be diol (b1) having, an average 4.5 to 60, and preferably 10 to 60 contiguous oxyethylene groups. Moreover, the weight percentage of diol (b1) in diol (b) is preferably 35-100 wt%, and more preferably 45-100 wt%. Excellent emulsification stability can be achieved by using diol (b1), and more excellent emulsification stability can be achieved by using 35wt% or above of diol (b1).

Furthermore, the weight percentage of the average 4.5 to 60 contiguous oxyethylene groups from the diol (b1) in the polyester resin (A) is typically 25-50 wt%, preferably 25-45 wt%, and more preferably 30-40 wt%. If the weight percentage is 25-50 wt%, the hydrophilicity is good, and sufficient emulsification stability and suitable viscosity can be obtained.

The example of (b1) includes the following compounds in the diol (b) exemplified above.

Diol (b11) includes AO adducts of biphenol containing aromatic ring, primary amine, or alicyclic diol, in which an average 4.5-60 contiguous EOs are added. Specific examples include adduct of bisphenol A with 20 moles of EO, adduct of bisphenol A with 40 moles of EO, adduct of bisphenol A with 80 moles of EO, and adduct of bisphenol A with 120 moles of EO, etc.. Furthermore, adducts of bisphenol A with, for example, 6 moles of EO are not included in Diol (b11), because the number of contiguous EO is 3 on average.

Diol (b12) includes AO adducts of aliphatic alkanediol having 3-4 carbon atoms, in which an average 4.5-60 contiguous EOs are added. Specific examples include adduct of propylene glycol with 9 moles of EO, adduct of propylene glycol with 1.3 moles of PO and 9 moles of EO (block adduct), adduct of propylene glycol with 1.3 moles of PO and 22 moles of EO (block adduct), and adduct of propylene glycol with 1.3 moles of PO and 22 moles of EO (random adduct), etc..

Diol (b13) includes AO adduct of ethylene glycol, in which the added moles of EOs is 3.5 to 59 moles. Specific examples include polyoxyethylene glycol, such as adduct of ethylene glycol with 3.5 moles of EOs and adduct of ethylene glycol with 59 moles of EOs, etc..

In view of the emulsification stability of the sizing agent, the preferred ones among diols (b1) are EO adducts of bisphenol A and/or ethylene glycol.

In view of the emulsification stability of the sizing agent, the preferred one or two or more diols (b) being used have 70 wt% or above of oxyethylene unit, and preferably 90 wt% or above of oxyethylene unit, based on the total weight of the diol.

The number of the contiguous oxyethylene groups and the weight percentage of the average 4.5 to 60 contiguous oxyethylene groups in diol (b) or polyester resin (A) can be determined by the method below.

For example, the polyester resin is hydrolyzed to separate the diol component, which is further fractioned by aliquot gel permeation chromatography (referred to as aliquot GPC), and identified for the structure by determining each fraction by NMR. Then the number or weight percent of the oxyethylene groups is calculated based on the structure and the weight of the fraction.

The determination conditions of aliquot GPC are, for example, as shown below:
Model: LC-09 (manufactured by Japan Analytical Industry Co., Ltd.)
Column: JAIGEL-3H

   +JAIGEL-2H

   +JAIGEL-1H
Column temperature: 25°C
Solvent: Chloroform
Flow rate: 3 ml/min
Sample concentration: 2 wt%
Injection volume: 3 ml

The polyester resin (A) of the present invention can be an uniform transparent solution or an uniform emulsion formed by mixing 10 parts by weight of polyester resin (A) and 90 parts by weight of water at 25°C. If the mixture is not in the form of uniform transparent solution or uniform emulsion, the emulsification stability is poor.

The determination of a uniform transparent solution or a uniform emulsion can be carried out according to the method below:
(1) adding 10 parts by weight of polyester resin (A) into a glass beaker, and then slowly adding 90 parts by weight of water in 30 min with stirring, while maintaining the temperature at 45°C-55°C;
(2) adjusting the temperature to 25°C;
(3) visually determining the presence of a uniform transparent solution or a uniform emulsion after standing for 48 hours at 25°C; and
(4) filtering with a wire screen of 400 mesh, and washing with 100 parts by weight of water, and then measuring the weight change of the wire screen prior and post filtration (dried at 130°C for 90 min).

Visual determination of a uniform transparent solution or a uniform emulsion and a weight increase of the wire screen post filtration being less than 0.1 parts by weight are an indication of a uniform transparent solution or a uniform emulsion; and visual determination of a non-uniform transparent solution or a non-uniform emulsion, or a weight increase of the wire screen post filtration being no less than 0.1 parts by weight is an indication of a non-uniform transparent solution or a non-uniform emulsion.

The polyester resin (A) of the present invention preferably has a number average molecular weight (referred to as Mn hereinafter) of 2,000-50,000. If Mn is 2,000 or above, the sizing property is adequate, and if Mn is 50,000 or below, the hydrophilicity is high and the emulsification stability is excellent. Furthermore, Mn can be determined by gel permeation chromatography (referred to as GPC hereinafter). Mn is more preferably 3,000-30,000, and particularly preferably 4,000-20,000. If Mn is in such a range, the sizing property and the hydrophilicity are more excellent.

The GPC conditions for determining Mn of polyester resin (A) are, for example, as shown below:
Model: HLC-8220GPC (Liquid chromatograph manufactured by Tosoh Co., Ltd.)
Column: TSK gel Super H4000
   +TSK gel Super H3000
   +TSK gel Super H2000
(all manufactured by Tosoh Co., Ltd)
Column temperature: 40°C
Detector: RI (Refractive Index)
Solvent: Tetrahydrofuran
Flow rate: 0.6 ml/min
Sample concentration: 0.25 wt%
Injection volume: 10 μl
Standard: Polystyrene (TSK STANDARD POLYSTYRENE, produced by Tosoh Co., Ltd.)

The viscosity of the polyester resin (A) according to the present invention at 100°C is preferably 0.5 Pa·s-50 Pa·s, more preferably 1 Pa·s-30 Pa·s, and particularly preferably 3 Pa·s-20 Pa·s. If the viscosity is in the range of 0.5 Pa·s-50 Pa·s, good sizing property and emulsification stability can be obtained. Moreover, the viscosity can be determined by Brookfield viscometer (BL model) following JIS K7117-1: 1999 (a counterpart of ISO2555: 1990).

The polyester resin (A) can be, for example, prepared by the process below: feeding an dicarboxylic acid or its anhydride (a) and diol (b) at a predefined mole ratio, and distilling at a reaction temperature of 100-250°C, and stirring to remove water under a pressure -0.1 MPa-1.2 MPa. The feeding mole ratio [(a)/(b)] of dicarboxylic acid or its anhydride (a) to diol (b) is preferably 0.7-1.5, and more preferably 0.8-1.25, in order to achieve Mn to be within the above range and improve the sizing property.

In the preparation of polyester resin (A), a catalyst is preferably added at an amount of 0.05 wt%-0.5 wt% based on the weight of polyester resin (A). The example of the catalyst includes *p*-toluenesulphonic acid, dibutyltin oxide, tetraisopropoxy titanate, and potassium oxalate titanate, in which tetraisopropoxy titanate and potassium oxalate titanate are preferred, and potassium oxalate titanate is more preferred, in consideration of the reactivity and impacts on environment.

In addition to the polyester resin (A), the sizing agent of the present invention can further contain at least one of an additional resin (B), a surfactant (C), and other additives (D).

If an additional resin (B) is contained, the compatibility with matrix resin is favorable. The strength of the fiber-reinforced plastic shaped body is thereby more favorable. Moreover, if a surfactant (C) is included, the sizing agent attached to an inorganic fiber tends to become smooth, such that the rub resistance of the inorganic fiber bundle is favorable.

The example of the additional resin (B) includes the thermoplastic resin (B1) and the thermosetting resin (B2).

The example of the thermoplastic resin (B1) includes the thermoplastic resin, etc. (e.g. polyethylene resin, polypropylene resin, polystyrene resin, polyurethane resin, polyamide resin, and acrylic resin, etc.) disclosed in International Publication Pamphlet No. WO2003/09015, International Publication Pamphlet No. WO2004/067612, Japanese Patent No. 2926227 or Japanese Patent No. 2616869. The example of the thermosetting resin (B2) includes epoxy resin, (meth)acrylate modified resin, and unsaturated polyester resin, etc. (e.g. compounds disclosed in Japanese Patent No. 3723462, etc). Furthermore, the so-called (meth)acrylate represents methacrylate or acrylate.

The example of epoxy resin includes diepoxide, phenolic novolac epoxy resin, and epoxided unsaturated fatty acid triglyceride, etc. (e.g. epoxided soybean oil and epoxided rape oil, etc.).

The example of diepoxide includes diglycidyl ether, diglycidyl ester, diglycidyl amine, and alicyclic diepoxide, etc..

The example of diglycidyl ether includes diglycidyl ether of diphenol, and diglycidyl ether of diol. The example of the diglycidyl ether of diphenol includes condensate (including polycondensate) of diphenol having 6-30 carbon atoms with epichlorohydrin, which is terminated with glycidyl ether, etc.. The example of diphenol includes bisphenol (e.g. bisphenol F, bisphenol A, bisphenol B, bisphenol AD, bisphenol S, and halogenated bisphenol A, etc), catechin, resorcinol, hydroquinone, 1,5-dihydroxylnaphthalene, dihydroxylbiphenyl, octachloro-4,4'-dihydroxylbiphenyl, tetramethylbiphenyl, and 9,9'-bis(4-hydroxylphenyl)fluorine, etc. The example of the diglycidyl ether of diol includes condensate (including polycondensate) of diol having 2-100 carbon atoms with epichlorohydrin, which is terminated with glycidyl ether, etc.. The example of diol includes ethylene glycol, propylene glycol, tetramethlene glycol, 1,6-hexanediol, polyethylene glycol, polypropylene glycol, polytetramethylene glycol, neopentyl glycol, and adduct of bisphenol A with AO (1-20 moles), etc.. Examples of AO include AO having 2 to 4 carbon atoms.

The mole ratio of diphenol unit or diol unit to epichlorohydrin unit {(diphenol unit or diol unit) : (epichlorohydrin unit)} in the diglycidyl ether is expressed as n : n+1. n is preferably 1to10, more preferably 1 to 8, and particularly preferably 1to 5. The diglycidyl ether also can be a mixture of n = 1 to 10 (e.g. a mixture of different polycondensation degrees, etc).

The example of diglycidyl ester includes, for example, diglycidyl ester of aromatic dicarboxylic acid and diglycidyl ester of aliphatic dicarboxylic acid, etc.. The example of diglycidyl ester of aromatic dicarboxylic acid includes condensate (including polycondensate) of aromatic dicarboxylic acid with epichlorohydrin, which has 2 glycidyl groups, etc.. The example of the diglycidyl ester of aliphatic dicarboxylic acid includes condensate (including polycondensate) of aryl core hydride of aromatic dicarboxylic acid (e.g. hexahydrophthalic acid and 4-cyclohexylene-1,2-dicarboxylic acid, etc.) or straight-chain or branched-chain aliphatic dicarboxylic acid (e.g. adipic acid and 2,2-dimethylpropanedicarboxylic acid, etc.) with epichlorohydrin, which has 2 glycidyl groups, etc.. The mole ratio of aromatic dicarboxylic acid unit or aliphatic dicarboxylic acid unit to epichlorohydrin unit {(aromatic dicarboxylic acid unit or aliphatic dicarboxylic acid unit): (epichlorohydrin unit)} in diglycidyl ester is expressed as n : n+1. n is preferably 1 to 10, more preferably 1 to 8, and particularly preferably 1 to 5. The diglycidyl ester also can be a mixture of n = 1 to 10.

The example of diglycidyl amine includes N-glycidyl compound (N,N-diglycidyl aniline and N,N-diglycidyl toluidine, etc.) obtained by reacting aromatic amine having 6 to 20 carbon atoms and 2 to 4 reactive hydrogen atoms (e.g. aniline and toluidine, etc.) with epichlorohydrin. The mole ratio of aromatic amine unit to epichlorohydrin unit {(aromatic amine unit) : (epichlorohydrin unit)} in diglycidyl amine is expressed as n : n+1. n is preferably 1 to 10, more preferably 1 to 8, and particularly preferably 1 to 5. Diglycidyl amine also can be a mixture of n = 1 to 10.

The example of alicyclic diepoxide includes alicyclic epoxide having 6 to 50 carbon atoms and 2 epoxy {e.g. vinyl cyclohexene dioxide), limonene dioxide, dicyclopentadiene dioxide, bis(2,3-epoxycyclopentyl)ether, ethylene glycol bisepoxydicyclopentyl ether, bis(3,4-epoxy-6-methylcyclohexylmethyl)adipate, and bis(3,4-epoxy-6-methylcyclohexylmethyl)butyl amine, etc.}.

In view of the strength of the shaped body, the preferred ones among these compounds are diglycidyl ether, more preferred ones are diglycidyl ether of diphenol, particularly preferred ones are diglycidyl ether of bisphenol, and the most preferred ones are diglycidyl ether of bisphenol A (bisphenol A type epoxy resin).

The example of (meth)acrylate modified resin includes (meth)acrylate modified thermoplastic resin and vinyl ester resin. The (meth)acrylate modified thermoplastic resin includes a modified compound of thermoplastic resin having alcoholic hydroxyl group {e.g. polyurethane, polyester and polyether, etc. (e.g. polypropylene glycol and polyethylene glycol, etc.)} obtained by modifying the hydroxyl group with (meth)acrylic acid, and examples includes polyurethane(di-/mono-)(meth)acrylate, polyester(di-/mono-)(meth)acrylate, polyether(di-/mono-)(meth)acrylate, and the like. Furthermore, the so-called (di-/mono-)(meth)acrylate represents di(meth)acrylate and mono(meth) acryl ate.

The example of vinyl ester resin includes (meth)acrylate modified bisphenol type epoxy resin, etc. {e.g. terminally modified resin with (meth)acrylate, etc., obtained by reacting the epoxy group of bisphenol A type epoxy resin with the carboxyl group of (meth)acrylic acid}.

Mn of the additional resin (B) is preferably 200to 10,000, more preferably 350 to 3,000, and particularly preferably 380 to 2,500. If Mn is within such a range, the strength of the shaped body will be more excellent.

In view of the strength of the shaped body, the additional resin (B) is preferably polyurethane resin, polyamide resin, or thermosetting resin (B2), more preferably polyurethane resin, epoxy resin, or (meth)acrylate modified resin, and most preferably epoxy resin.

The example of surfactant (C) includes the well-known surfactants, etc., such as nonionic surfactant, anionic surfactant, cationic surfactant, and amphiprotic surfactant, etc. (e.g. surfactants disclosed in Japanese Patent Publication No. 2006-124877, and International Publication No. WO2003/37964). These surfactants also can be used in combination of two or more. Moreover, in addition to the compounds disclosed in the documents above, the surfactant (C) further includes, for example, AO adduct {weight average molecular weight (referred as Mw hereinafter): 500 to100,000} of polyhydric alcohol (having 2 to 8 hydroxyl groups, and 2 to 6 carbon atoms, e.g. ethylene glycol, propylene glycol, glycerol, pentaerythritol, and sorbitan, etc.), sulfate (e.g. sodium salt, potassium salt, ammonium salt, and alkanol amine salt, etc.) of AO adduct (Mw: 500 to 5,000) of alkylphenol (having 10 to 20 carbon atoms), or sulfate of AO adduct (Mw: 500 to 5,000) of arylalkylphenol {e.g. styrenated phenol (having 14 to 62 carbon atoms), styrenated i-propylphenol, and styrenated cresol (having 15-61 carbon atoms), etc.}. Furthermore, AO in surfactant (C) can be EO alone, or includes EO and at least one of PO and BO. When AO includes at least one of PO and BO, random adduct, block adduct and mixed adduct thereof can be considered.

Aside from replacing the standard with ethylene glycol, Mw of the surfactant (C) is determined following the same method as that for Mn.

The surfactant (C) is preferably anionic surfactant, nonionic surfactant, or a mixture thereof, more preferably AO adduct of alkylphenol, AO adduct of arylalkylphenol, sulfate of AO adduct of alkylphenol, sulfate of AO adduct of arylalkylphenol, or a mixture thereof, and particularly preferably AO (EO and PO) adduct of arylalkylphenol, sulfate of AO (EO and PO) adduct of arylalkylphenol, or a mixture thereof.

Other additive (D) includes, for example, lubricant, preservative, and antioxidant, etc.

The example of lubricant includes wax (e.g. polyethylene, polypropylene, polyethylene oxide, polypropylene oxide, modified polyethylene, and modified polypropylene, etc.), higher fatty acid alkyl (having 1 to 24 carbon atoms) ester (e.g. methyl stearate, ethyl stearate, propyl stearate, butyl stearate, octyl stearate, and octadecayl stearate, etc.), higher fatty acid (e.g. myristic acid, palmitic acid, and stearic acid, etc.), natural oil (coconut oil, beef tallow, olive oil, and rape oil, etc.), and flowable paraffin.

The example of preservative includes benzoic acid, salicylic acid, sorbic acid, and quaternary ammonium salt, and imidazole, etc..

The example of the antioxidant includes phenol (e.g. 2,6-di-t-butyl-p-cresol, etc.), thiodipropionate (e.g. di(dodecyl) 3,3'-thiodipropionate, etc), and phosphate (triphenyl phosphate, etc.).

The content of the polyester resin (A), the additional resin (B), the surfactant (C), and the other additive (D) in the sizing agent of the present invention are as described below respectively.

The content of (A) is preferably 5 wt%-100 wt%, more preferably 7 wt%-90 wt%, and particularly preferably 10 wt%-70 wt%, based on the total weight of (A), (B), (C), and (D).

The content of (B), if used, is preferably 5 wt%-70 wt%, more preferably 10 wt%-55 wt%, and particularly preferably 15 wt%-40 wt%, based on the total weight of (A), (B), (C), and (D).

The content of (C), if used, is preferably 0.5 wt%-20 wt%, more preferably 1 wt%-15 wt%, and particularly preferably 2 wt%-10 wt%, based on the total weight of (A), (B), (C), and (D).

The content of (D), if used, is preferably 10 wt%-60 wt%, more preferably 20 wt%-55 wt%, and particularly preferably 30 wt%-50 wt%, based on the total weight of (A), (B), (C), and (D).

The sizing agent of the present invention is an aqueous solution or emulsion containing an aqueous medium. If an aqueous medium is present, a suitable amount of polyester resin (A) adhered on the fiber can be achieved. Hence, a fiber bundle having a shaped body with more excellent strength is obtained. The example of the aqueous medium includes the well-known aqueous medium water, hydrophilic organic solvent [e.g. lower alcohol having 1 to 4 carbon atoms (e.g. methanol, ethanol, and isopropanol, etc.), ketone having 3 to 6 carbon atoms (e.g. acetone, methylethyl ketone, methylisobutyl ketone, etc.), glycol having 2 to 6 carbon atoms (e.g. ethylene glycol, propylene glycol, diethylene glycol, and triethylene glycol, etc.) and monoalkyl (having 1 to 2 carbon atoms) ether thereof, dimetylformamide, and alkyl acetate having 3-5 carbon atoms (e.g. methyl acetate, ethyl acetate, etc.), etc.]. The aqueous media can be used in combination of two or more. In view of safety, the aqueous medium is preferably water or a mixed solvent of water and hydrophilic organic solvent, with water being more preferred.

In view of cost, the sizing agent of the present invention is preferably at a high concentration while flowing and at a low concentration during production of fiber bundle. That is, flowing at a high concentration can lower, for example, the transportation and inventory cost, and treating a fiber at a low concentration can produce a fiber bundle which imparts excellent strength to the shaped body.

In view of the storage stability, the concentration of the concentrated aqueous solution or emulsion (except for aqueous medium, the proportion of the components contained) is preferably 30 to 80 wt%, and more preferably 40 to 70 wt%. On the other hand, in view of making the adhesion amount of the sizing agent suitable in the production of the fiber bundle, the concentration of the diluted aqueous solution or emulsion is preferably 0.5-15 wt%, and more preferably 1-10 wt%.

The sizing agent of the present invention can be prepared by mixing (A), the aqueous medium, and optional (B)-(D) in any order, and preferably by first mixing the components except the aqueous medium, and then adding the aqueous medium into the resulting mixture to dissolve, or emulsify and disperse the mixture. Furthermore, if two or more additional resins (B) are used, one of the resins can also be added into the intermediate aqueous solution or emulsion finally for mixing.

In view of the convenient mixing, the pre-mixing temperature of the components except the aqueous medium is preferably 20°C-90°C, and more preferably 40°C-90°C, so is the temperature of subsequent dissolving or emulsifying and dispersing.

The dissolving or emulsifying and dispersing time is preferably 1to 20 hours, and more preferably 2 to 10 hours.

The type of mixing apparatus, dissolving apparatus, and emulsifying and dispersing apparatus is not limited, for example, stirring blade (blade shape: oar, and three paddle type, etc.), Nautor mixer, ribbon mixer, conical blender, mortar mixer, universal mixer (e.g. the universal mixer and stirrer 5DM-L, manufactured by San-ei Manufacturing Co., Ltd., etc.) and Henschel mixer can be used.

The example of the fiber of which the sizing agent of the present invention is applicable includes, for example, the well-known inorganic fiber, such as glass fiber, carbon fiber, aramid fiber, ceramic fiber, metal fiber, mineral fiber, rock fiber and slug fiber, etc. (e.g. the fiber disclosed in Pamphlet No. WO2003/47830), and the carbon fiber is preferred considering the strength of the shaped body. These fibers can also be used in combination of two or more.

The fiber bundle of the present invention (a fiber bundle having about 3,000 to 30,000 fibers) can be produced by treating at least one fiber selected from the group consisting of these fibers with the sizing agent above.

The method for treating the fiber includes, for example, spraying and impregnation. The adhesion amount (weight percent) of polyester resin (A) on the fiber is preferably 0.05-5, and more preferably 0.2-2.5, based on the weight of the fiber. If the adhesion amount is in such a range, the strength of the shaped body will be more excellent.

The fiber product of the present invention is produced by processing the fiber bundle above, and includes woven fabric, knitted fabric, nonwoven cloth (e.g. felt, mat, and paper, etc.), chopped fiber, and milled fiber, etc..

The prepreg of the present invention contains the fiber bundle or fiber product above and a matrix resin, and optionally a catalyst. If the catalyst is present, the shaped body will have a more favorable strength. The example of the matrix resin includes the thermoplastic resin (B1) and the thermosetting resin (B2), wherein the thermosetting resin (B2) is preferred, and epoxy resin, unsaturated polyester resin, vinyl ester resin is more preferred. The example of the catalyst includes the well-known hardener and hardening promoter for epoxy resin, etc. (e.g. the catalyst disclosed in Japanese Patent Publication No. 2005-213337).

In view of the strength of the shaped body, the weight ratio of the matrix resin to fiber bundle (matrix resin/fiber bundle) is preferably 10/90 to 90/10, more preferably 20/80 to 70/30, and particularly preferably 30/70 to 60/40. The content (weight percent) of the catalyst, if any, is preferably 0.01 to 10, more preferably 0.1 to 5, and particularly preferably 1 to 3 relative to the matrix resin, considering the strength of the shaped body, etc..

The prepreg can be produced by impregnating a hot melt matrix resin (melting temperature: 60°C to 150°C), or a matrix resin diluted with a solvent (e.g. acetone, methylethyl ketone, methylisopropyl ketone, toluene, xylene, and ethyl acetate, etc..) in the fiber bundle or fiber product. If a solvent is used, the prepreg is preferably dried to remove the solvent.

The shaped body of the present invention can be obtained by shaping the prepreg. If the matrix resin is a thermoplastic resin, the shaped body can be produced by heating the prepreg for shaping, and then curing at normal temperature. If the matrix resin is a thermosetting resin, the shaped body can be produced by heating the prepreg for shaping, and then hardening it. It is not necessarily to complete the hardening step, and preferably, the prepreg is hardened to the degree at which the shape of the shaped body can be maintained. After shaping, the prepreg can be further heated to be completely hardened. The hot shaping process is not particularly limited; for example, the hot shaping process includes filament winding and shaping process (in which hot shaping is performed while applying tension on the rotating spindle and winding), compression shaping process (in which the heat shaping is performed after laminating the prepreg sheet), autoclave process (in which the prepreg sheet is pressed onto a mold for hot shaping), and injection molding process following mixing the chopped fiber and milled fiber with the matrix resin.

### [Embodiments]

Hereinafter, the present invention will be further described with reference to the following embodiments, but the present invention is not limited to the disclosure of these embodiments in any way. If not indicated otherwise hereinafter, the part represents part by weight, and % represents wt% (i.e. weight percent).

Mn can be determined by GPC under the conditions below:
Model: HLC-8220GPC (Liquid chromatograph manufactured by Tosoh Co., Ltd.)
Column: TSK gel Super H4000
   +TSK gel Super H3000
   +TSK gel Super H2000
(all manufactured by Tosoh Co., Ltd.)
Column temperature: 40°C
Detector: RI (Refractive Index)
Solvent: tetrahydrofuran
Flow rate: 0.6 ml/min
Sample concentration: 0.25%
Injection volume: 10 µl
Standard: Polystyrene (TSK STANDARD POLYSTYRENE, produced by Tosoh Co., Ltd.)

The viscosity is the average of 2 measurements under the conditions below:
Model: BL Type Viscometer (manufactured by Tokisangyo. Co., Ltd.)
Rotation rate of rotor: 60 rpm (when the viscosity is 10 Pa·s or below)
   6 rpm (when the viscosity is 10 Pa·s or above)
Measuring temperature: 100°C
Rotor: No. 4

The determination of uniform transparent solution or uniform emulsion can be carried out according to the test method below:
(1) adding 10 g of polyester resin (A) into a glass beaker of 200 ml, and slowly adding 90 g of water in 30 min with stirring, while maintaining the temperature at 45°C-55°C;
(2) adjusting the temperature to 25°C;
(3) visually determining the presence of uniform transparent solution or uniform emulsion after standing for 48 hours at 25°C; and
(4) filtering with a wire screen of 400 mesh, and washing once with 100 parts by weight of water, and then measuring the weight change of the wire screen prior and post filtration (dried at 130°C for 90 min).

Visual determination of a uniform transparent solution or a uniform emulsion, and a weight increase of the wire screen post filtration being less than 0.1 g are an indication of a uniform transparent solution or a uniform emulsion; and visual determination of a non-uniform transparent solution or a non-uniform emulsion, or a weight increase of the wire screen post filtration being no less than 0.1 g is an indication of a non-uniform transparent solution or a non-uniform emulsion.

### Preparation Example 1 [Synthesis of EO Adduct of Bisphenol A (b3-1)]

228 parts of bisphenol A, 400 parts of toluene and 2 parts of potassium hydroxide were charged into an autoclave, and then 1,760 parts of EO was added in 3 hours at 100°C, and under -0.1 MPa, while adjusting the pressure to be no higher than 0.5 MPa. After aging for 1 hour at 120°C, the pressure is lowered to -0.1 MPa to distill the toluene off. 1,980 parts of EO adduct of bisphenol A is obtained (the added moles is 40 moles, and the number of contiguous oxyethylene groups is 20 on average).

### Preparation Example 2 [Synthesis of EO Adduct of Bisphenol A (b3-2)]

The process was the same as that in Preparation Example 1, except that 1,000 parts of toluene, 3 parts of potassium hydroxide, and 3,520 parts of EO were used. 3,700 parts of EO adduct of bisphenol A is obtained (the added moles is 80 moles, and the number of contiguous oxyethylene groups is 40 on average).

### Preparation Example 3 [Synthesis of EO Adduct of Bisphenol A (b3-3)]

The process was the same as that in Preparation Example 1, except that 1,500 parts of toluene, 4 parts of potassium hydroxide, and 5,280 parts of EO were used. 5,500 parts of EO adduct of bisphenol A is obtained (the added moles is 120 moles, and the number of contiguous oxyethylene groups is 60 on average).

### Preparation Example 4 [Synthesis of PO-EO Block Adduct (b3-4)]

76 parts of propylene glycol and 1 part of potassium hydroxide were charged into an autoclave, and then 75.4 parts of PO was added in 3 hours at 100°C and under -0.1 MPa, while adjusting the pressure to be no higher than 0.5 MPa. After aging for 1 hour at 100°C, 396 parts of EO was further added at 150°C, while adjusting the pressure to be no higher than 0.5 MPa, and aging for 1 hour at 150°C. 545 parts of EO-PO block adduct is obtained (the added moles of PO and EO are 2.3 and 9, respectively, and the number of contiguous oxyethylene groups is, on an average, 4.5).

### Preparation Example 5 [Synthesis of PO-EO Block Adduct (b3-5)]

The process was the same as that in Preparation Example 4, except that 968 parts of EO was used. 1,100 parts of PO-EO block adduct is obtained (the added moles of PO and EO are 2.3 and 22 respectively, and the number of contiguous oxyethylene groups is 11 on average).

### Preparation Example 6 [Synthesis of PO-EO Random Adduct (b3-6)]

The process was the same as that in Preparation Example 5, except that PO and EO were charged at the same time. 1,090 parts of PO-EO random adduct is obtained (the addition moles of PO and EO are 2.3 and 22 respectively, and the number of contiguous oxyethylene groups is 9.5 on average).

### Preparation Example 7 [Synthesis of Polyoxyethylene Glycol (b3-7)]

62 parts of ethylene glycol and 0.2 part of potassium hydroxide were charged into an autoclave, and 176 parts of EO was further added in 3 hours at 150°C and under -0.1 MPa, while adjusting the pressure to be no higher than 0.5 MPa. After aging for 1 hour at 150°C, 238 parts of polyoxyethylene glycol is obtained (the added moles of EO is 4, and the number of the contiguous oxyethylene groups is 5 on average).

### Preparation Example 8 [Synthesis of Polyester Resin (A1)]

404 parts of EO adduct of bisphenol A obtained by adding 4 parts by mole of EO to 1 part by mole of bisphenol A (NEWPOL BPE-40 produced by Sanyo Chemical Industries, Ltd., referred to as BPE-40 hereinafter), 232 parts of fumaric acid (alcohol/acid = 1/2 mole ratio) and 0.5 part of tetraisopropoxy titanate were reacted for 10 hours in a glass reactor at 170°C under a stream of nitrogen, while water is being distilled off. 238 parts of polyoxyethylene glycol (b3-7) was further added and reacted for 10 hours at 180°C under a reduced pressure of -0.1 MPa, while water is being distilled off to obtain 800 parts of polyester resin (A1).

For (A1), the average number of contiguous oxyethylene groups in diol (b1) having an average 4.5-60 contiguous oxyethylene groups, the weight percent of diol (b1) in diol (b), the weight percent of oxyethylene groups of oxyalkylene in diol (b), the weight percent of an average 4.5-60 contiguous oxyethylene groups in polyester resin (A1), Mn of (A1), viscosity at 100°C, and the determination results of whether an uniform transparent solution or an uniform emulsion is present are shown in Table 1. The weight percentages and the determination results for the polyester resin (A2)-(A14), and (Ax1) below are also shown in Table 1.

### Preparation Example 9 [Synthesis of Polyester Resin (A2)]

1,488 parts of ethylene glycol, 4,150 parts of terephthalic acid (alcohol/acid = 24/25 mole ratio) and 1 part of tetraisopropoxy titanate were reacted for 10 hours in a glass reactor at 200°C under a reduced pressure of -0.1 MPa, while water is being distilled off. 5,508 parts of EO adduct of bisphenol A (b3-3) was further added and reacted for 20 h at 200°C under a reduced pressure of -0.1 MPa, while water is being distilled off to obtain 10,500 parts of polyester resin (A2).

### Preparation Example 10 [Synthesis of Polyester Resin (A3)]

The process was the same as that in Preparation Example 9, except that the reaction time was 10 hours after EO adduct of bisphenol A (b3-3) was added. 10,500 parts of polyester resin (A3) was obtained.

### Preparation Example 11 [Synthesis of Polyester Resin (A4)]

1,580 parts of EO adduct of bisphenol A obtained by adding 2 parts by mole of EO to 1 part by mole of bisphenol A (NEWPOL BPE-20 produced by Sanyo Chemical Industries, Ltd., referred to as BPE-20 hereinafter), 996 parts of terephthalic acid (alcohol/acid = 5/6 mole ratio) and 2 parts of tetraisopropoxy titanate were reacted for 10 hours in a glass reactor at 170°C under a stream of nitrogen while water is being distilled off. 1,590 parts of EO adduct of bisphenol A (b3-2) was further added and reacted for 10 hours at 180°C under a reduced pressure of -0.1 MPa, while water is being distilled off to obtain 3,900 parts of polyester resin (A4).

### Preparation Example 12 [Synthesis of Polyester Resin (A5)]

632 parts of BPE-20, 498 parts of terephthalic acid (alcohol/acid = 2/3 mole ratio) and 2 parts of tetraisopropoxy titanate were reacted for 10 hours in a glass reactor at 170°C under a stream of nitrogen, while water is being distilled off. 1,126 parts of PO-EO block adduct (b3-4) was further added and reacted for 10 hours at 180°C under a reduced pressure of -0.1 MPa, while water is being distilled off to obtain 2,000 parts of polyester resin (A5).

### Preparation Example 13 [Synthesis of Polyester Resin (A6)]

948 parts of BPE-20, 664 parts of terephthalic acid (alcohol/acid = 2/3 mole ratio), and 2 parts of tetraisopropoxy titanate were reacted for 10 hours in a glass reactor at 170°C under a stream of nitrogen, while water is being distilled off. 1,703 parts of PO-EO block adduct (b3-5) was further added and reacted for 10 hours at 180°C under a reduced pressure of -0.1 MPa, while water is being distilled off to obtain 3,100 parts of polyester resin (A6).

### Preparation Example 14 [Synthesis of Polyester Resin (A7)]

948 parts of BPE-20, 664 parts of terephthalic acid (alcohol/acid = 2/3 mole ratio) and 2 pars of tetraisopropoxy titanate were reacted for 10 hours in a glass reactor at 170°C under a stream of nitrogen, while water is being distilled off. 1,703 parts of PO-EO block adduct (b3-6) (75.4 wt% in diol) was further added and reacted for 10 hours at 180°C under a reduced pressure of -0.1 MPa, while water is being distilled off to obtain 3,100 parts of polyester resin (A7).

### Preparation Example 15 [Synthesis of Polyester Resin (A8)]

1,580 parts of BPE-20, 996 parts of terephthalic acid (alcohol/acid = 5/6 mole ratio) and 2 parts of tetraisopropoxy titanate were reacted for 10 hours in a glass reactor at 170°C under a stream of nitrogen, while water is being distilled off. 1,928 parts of EO adduct of bisphenol A (b3-2) was further added and reacted for 10 hours at 180°C under a reduced pressure of -0.1 MPa, while water is being distilled off to obtain 4,200 parts of polyester resin (A8).

### Preparation Example 16 [Synthesis of Polyester Resin (A9)]

2,528 parts of BPE-20, 1,044 parts of fumaric acid (alcohol/acid = 8/9 mole ratio) and 4 parts of tetraisopropoxy titanate were reacted for 10 hours in a glass reactor at 170°C under a stream of nitrogen, while water is being distilled off. 3,748 parts of EO adduct of bisphenol A (b3-2) was further added and reacted for 15 hours at 180°C under a reduced pressure of -0.1 MPa, while water is being distilled off, to obtain 7,100 parts of polyester resin (A9).

### Preparation Example 17 [Synthesis of Polyester Resin (A10)]

1,264 parts of BPE-20, 830 parts of terephthalic acid (alcohol/acid = 4/5 mole ratio) and 2 parts of tetraisopropoxy titanate were reacted for 10 hours in a glass reactor at 170°C under a stream of nitrogen, while water is being distilled off. 1,928 parts of EO adduct of bisphenol A (b3-1) was further added and reacted for 10 hours at 180°C under a reduced pressure of -0.1 MPa, while water is being distilled off to obtain 3,800 parts of polyester resin (A10).

### Preparation Example 18 [Synthesis of Polyester Resin (A11)]

1,896 parts of BPE-20, 1,162 parts of terephthalic acid (alcohol/acid = 6/7 mole ratio) and 3 parts of tetraisopropoxy titanate were reacted for 10 hours in a glass reactor at 170°C under a stream of nitrogen, while water is being distilled off. 1491 parts of EO adduct of bisphenol A (b3-1) was further added and reacted for 10 hours at 180°C under a reduced pressure of -0.1 MPa, while water is being distilled off to obtain 4,200 parts of polyester resin (A11).

### Preparation Example 19 [Synthesis of Polyester Resin (A12)]

2,212 parts of BPE-20, 996 parts of terephthalic acid (alcohol/acid = 7/6 mole ratio) and 3 parts of potassium oxalate titanate were reacted for 15 hours in a glass reactor at 230°C under reduced pressure of -0.1 MPa, while water is being distilled off. 1,500 parts of polyethylene glycol (PEG1500 having 33.3 contiguous oxyethylene groups, produced by Sanyo Chemical Industries, Ltd.) was further added and reacted for 10 hours at 180°C under normal pressure, while water is being distilled off to obtain 4,490 parts of polyester resin (A12).

### Preparation Example 20 [Synthesis of Polyester Resin (A13)]

The process was the same as that in Preparation Example 18, except that tetraisopropoxy titanate was replaced by potassium oxalate titanate. 4,200 parts of polyester resin (A13) is obtained.

### Preparation Example 21 [Synthesis of Polyester Resin (A14)]

The process was the same as that in Preparation Example 19, except that tetraisopropoxy titanate was replaced by potassium oxalate titanate. 4,490 parts of polyester resin (A 14) is obtained.

### Comparative Preparation Example 1 [Synthesis of Polyester Resin (Ax1)]

492 parts of bisphenol A-ethylene oxide adduct obtained by adding 6 parts by mole of EO to 1 part by mole of bisphenol A (NEWPOL BPE-60 produced by Sanyo Chemical Industries, Ltd.), 166 parts of terephthalic acid (alcohol/acid = 1/1 mole ratio) and 1 part of tetraisopropoxy titanate were reacted for 10 hours in a glass reactor at 200°C under a reduced pressure of -0.1 MPa, while water is being distilled off to obtain 600 parts of polyester resin (Ax1).

**[Table 1]**

| | | Name of polyester resin (A) | Diol (b1) having 4.5-60 contiguous oxyethylene groups on average | Average number of contiguous oxyethylene groups | Weight percent of diol (b1) having 4.5-60 contiguous oxyethylene groups on average in diol (b) | Weight percent of oxyethylene groups relative to oxyalkylene contained in diol (b) | Weight percent of average 4.5-60 contiguous oxyethylene groups in polyester resin (A) | Mn | Viscosity at 100°C (Pa·s) | Determination of uniform transparent solution or uniform emulsion | | |
|---|---|---|---|---|---|---|---|---|---|---|---|---|
| | | | | | | | | | | Appearance | Weight increase of wire screen post filtration (g) | Determination results |
| | 8 | (A1) | (b3-7) | 5 | 37.1 | 100 | 27.0 | 2,050 | 0.6 | White emulsion | 0.0 | Uniform emulsion |
| | 9 | (A2) | (b3-3) | 60 | 78.7 | 100 | 51.5 | 49,000 | 49.0 | White emulsion | 0.0 | Uniform emulsion |
| | 10 | (A3) | (b3-3) | 60 | 78.7 | 100 | 49.0 | 29,000 | 29.0 | White emulsion | 0.0 | Uniform emulsion |
| | 11 | (A4) | (b3-2) | 40 | 52.0 | 100 | 35.5 | 4,050 | 4.5 | White emulsion | 0.0 | Uniform emulsion |
| | 12 | (A5) | (b3-4) | 11.3 | 55.6 | 74.8 | 38.8 | 2,300 | 0.5 | White emulsion | 0.0 | Uniform emulsion |
| | 13 | (A6) | (b3-5) | 24.3 | 75.4 | 85.3 | 46.3 | 3,200 | 3.1 | White emulsion | 0.0 | Uniform emulsion |
| Preparation Example | 14 | (A7) | (b3-6) | 9.5 | 75.4 | 85.3 | 46.3 | 3,200 | 3.1 | White emulsion | 0.0 | Uniform emulsion |
| | 15 | (A8) | (b3-2) | 40 | 56.8 | 100 | 39.6 | 4,300 | 6.2 | White emulsion | 0.0 | Uniform emulsion |
| | 16 | (A9) | (b3-2) | 40 | 59.7 | 100 | 49.3 | 9,900 | 14.0 | White emulsion | 0.0 | Uniform emulsion |
| | 17 | (A10) | (b3-1) | 20 | 62.5 | 100 | 44.6 | 4,100 | 4.5 | White emulsion | 0.0 | Uniform emulsion |
| | 18 | (A11) | (b3-1) | 20 | 45.5 | 100 | 30.3 | 4,200 | 5.5 | White emulsion | 0.0 | Uniform emulsion |
| | 19 | (A12) | PEG1500 | 33.3 | 40.4 | 100 | 37.4 | 2,500 | 2.1 | White emulsion | 0.0 | Uniform emulsion |
| | 20 | (A13) | (b3-1) | 20 | 45.5 | 100 | 30.3 | 4,800 | 5.8 | White emulsion | 0.0 | Uniform emulsion |
| | 21 | (A14) | PEG1500 | 33.3 | 40.4 | 100 | 37.4 | 2,700 | 2.4 | White emulsion | 0.0 | Uniform emulsion |
| Comparative Preparation Example | 1 | (Ax1) | - | 3 | 0.0 | 53.7 | 0.0 | 1,900 | 0.3 | White emulsion | 10.0 | Non-uniform emulsion |

### Embodiment 1

600 parts of polyester resin (A1), 350 parts of bisphenol A type epoxy resin (Epikote 834 produced by Japan Epoxy Resins Co., Ltd.) and 50 parts of surfactant (PO-EO adduct of styrenated phenol, i.e. Soprophor 796/P produced by Rhodia Nicca Ltd.) were uniformly mixed for 30 min. in an universal mixer (manufactured by San-ei Manufacturing Co., Ltd.) at 70°C. 1,500 parts of water in total was added dropwise in 6 hours to obtain 2,500 parts of sizing agent (S1) of the present invention (appearance: white emulsion).

### Embodiment 2

The sizing agent (S2) of the present invention was produced in the same way as that in Embodiment 1, except that the polyester resin (A1) was replaced by (A2) (appearance: white emulsion).

### Embodiment 3

The sizing agent (S3) of the present invention was produced in the same way as that in Embodiment 1, except that the polyester resin (A1) was replaced by (A3) (appearance: white emulsion).

### Embodiment 4

The sizing agent (S4) of the present invention was produced in the same way as that in Embodiment 1, except that the polyester resin (A1) was replaced by (A4) (appearance: white emulsion).

### Embodiment 5

1,000 parts of polyester resin (A4) was uniformly mixed for 30 min in a universal mixer (manufactured by San-ei Manufacturing Co., Ltd.) at 70°C. 1,500 parts of water in total was added dropwise in 6 hours to obtain 2,500 parts of the sizing agent (S5) of the present invention (appearance: white emulsion).

### Embodiment 6

The sizing agent (S6) of the present invention was produced in the same way as that in Embodiment 1, except that the polyester resin (A1) was replaced by (A5) (appearance: white emulsion).

### Embodiment 7

The sizing agent (S7) of the present invention was produced in the same way as that in Embodiment 1, except that the polyester resin (A1) was replaced by (A6) (appearance: white emulsion).

### Embodiment 8

The sizing agent (S8) of the present invention was produced in the same way as that in Embodiment 1, except that the polyester resin (A1) was replaced by (A7) (appearance: white emulsion).

### Embodiment 9

The sizing agent (S9) of the present invention was produced in the same way as that in Embodiment 1, except that the polyester resin (A1) was replaced by (A8) (appearance: white emulsion).

### Embodiment 10

The sizing agent (S10) of the present invention was produced in the same way as that in Embodiment 1, except that the polyester resin (A1) was replaced by (A9) (appearance: white emulsion).

### Embodiment 11

The sizing agent (S11) of the present invention was produced in the same way as that in Embodiment 1, except that the polyester resin (A1) was replaced by (A10) (appearance: white emulsion).

### Embodiment 12

The sizing agent (S12) of the present invention was produced in the same way as that in Embodiment 1, except that the polyester resin (A1) was replaced by (A11) (appearance: white emulsion).

### Embodiment 13

500 parts of polyester resin (A12), 350 parts of bisphenol A type epoxy resin (Epikote 1001, produced by Japan Epoxy Resins Co., Ltd.) and 150 parts of surfactant (PO-EO adduct of styrenated phenol, i.e. Soprophor 796/P produced by Rhodia Nicca Ltd.) were uniformly mixed for 30 min in an universal mixer (manufactured by San-ei Manufacturing Co., Ltd.) at 70°C. 1,500 parts of water in total was added dropwise in 6 hours to obtain 2,500 parts of an emulsion. 1,000 parts of urethane resin emulsion (Chemitylen GA2 produced by Sanyo Chemical Industries, Ltd.) was added into 1,000 parts of the emulsion to obtain the sizing agent (S13) of the present invention (appearance: white emulsion).

### Embodiment 14

500 parts of polyester resin (A12), 350 parts of bisphenol A type epoxy resin (Epikote 1001, produced by Japan Epoxy Resins Co., Ltd.) and 150 parts of surfactant (PO-EO adduct of styrenated phenol, Soprophor 796/P produced by Rhodia Nicca Ltd.) were uniformly mixed for 30 min in an universal mixer (manufactured by San-ei Manufacturing Co., Ltd.) at 70°C. 1,500 parts of water in total was added dropwise in 6 hours to obtain 2,500 parts of an emulsion. 400 parts of rape oil was added into 1,000 parts of the emulsion to obtain the sizing agent (S14) of the present invention (appearance: white emulsion).

### Embodiment 15

The sizing agent (S15) of the present invention was produced in the same way as that in Embodiment 1, except that the polyester resin (A1) was replaced by (A13) (appearance: white emulsion).

### Embodiment 16

The sizing agent (S16) of the present invention was produced in the same way as that in Embodiment 14, except that the polyester resin (A12) was replaced by (A14) (appearance: white emulsion).

### Embodiment 17

800 parts of rape oil was added into 2,000 parts of sizing agent (S13) to obtain the sizing agent (S17) of the present invention (appearance: white emulsion).

### Embodiment 18

700 parts of polyester resin (A14) and 300 parts of bisphenol A type epoxy resin (Epikote 828, produced by Japan Epoxy Resins Co., Ltd.) were uniformly mixed for 30 min in a universal mixer (manufactured by San-ei Manufacturing Co., Ltd.) at 70°C. 1,500 parts of water in total was added dropwise in 6 hours to obtain 2,500 parts of sizing agent (S18) of the present invention (appearance: white emulsion).

### Comparative Example 1

450 parts of polyester resin (Ax1), 350 parts of bisphenol A type epoxy resin (Epikote 834, produced by Japan Epoxy Resins Co., Ltd.), 200 parts of surfactant (PO-EO adduct of styrenated phenol, i.e. Soprophor 796/P produced by Rhodia Nicca Ltd.) were uniformly mixed for 30 min in an universal mixer (manufactured by San-ei Manufacturing Co., Ltd.) at 70°C. 1,500 parts of water in total was added dropwise in 6 hours to obtain 2,500 parts of sizing agent (Sx1) of the present invention (appearance: white emulsion).

The emulsification stability of sizing agents (S1) to (S18) and sizing agent (Sx1) were evaluated. Furthermore, the sizing property of carbon fiber bundle (1) and the adhesive property (interlaminar shear strength) of the carbon fiber bundle (1) with a matrix resin were also evaluated, in which the carbon fiber bundle (1) is obtained by diluting these sizing agents to a content of 1.5% based on the essential components (components except water) with water, impregnating the carbon fiber (fineness: 800 tex, filament number: 12,000) with the diluted sizing agent, and drying for 3 min at 150°C with hot air. The results are shown in Table 2.

The emulsification stability can be determined under the conditions below.

190 g water of 40°C was added with stirring to 10 g of the essential components of the sizing agent. The temperature of the sizing agent dilution was adjusted to 40°C, and a shear was applied for 10 min at 8,000 rpm by a homogenizer (K RoboMix manufactured by Tokushu Kika Kogyo Co., Ltd.). The sizing agent dilution was filtrated with a wire screen of 400 mesh (about 10 cm x 10 cm, weight: about 5 g), and then the weight increase (g) of the wire screen prior and post filtration was measured. The lesser the weight increase is, the better the emulsification stability is.

The evaluation of the sizing property can be performed on the carbon fiber bundle (1) based on cantilever test at 45 degree following JIS L1096-1999 8.19.1. The higher the value is, the better the sizing property is.

Interlaminar shear strength (ILSS) can be evaluated following the method below.

The carbon fiber bundle was stretched in a direction, placed into a mold (a frame with length, width, and thickness of 10 cm x 10 cm x 2.5 mm), and a matrix resin obtained by mixing a bisphenol A type diglycidyl ether (epoxy equivalent 190) and a BF3 monoethyl amine salt in a ratio of 100:3 in weight was added to impregnate the carbon fiber bundle under a reduced pressure (650 Pa). The amount of the carbon fiber bundle was adjusted such that the volume fraction of the fiber was 60%. After the impregnation, the carbon fiber bundle was hardened for 1 hour at 150°C under an elevated pressure (0.49 MPa), and further hardened for 4 hours at 140°C at the same pressure. The hardened object obtained was cut into a sample of 12 mm x 6.0 mm x 2.5 mm in length, width and height with a diamond cutter, and then tested for interlaminar shear strength (ILSS) following ASTM D-2344. The higher the value is, the better the interlaminar shear strength is. Furthermore, if the interlaminar shear strength is good, the strength of the shaped body is also good.

**[Table 2]**

| | | Name of sizing agent | Emulsification stability (g) | Sizing property (cm) | Interlaminar Shear Strength (MPa) |
|---|---|---|---|---|---|
| Embodiment | 1 | (S1) | 0 | 10.5 | 8.8 |
| | 2 | (S2) | 0 | 16.9 | 8.1 |
| | 3 | (S3) | 0 | 16.3 | 8.2 |
| | 4 | (S4) | 0 | 13.5 | 8.5 |
| | 5 | (S5) | 0 | 15.6 | 8.2 |
| | 6 | (S6) | 0 | 10.8 | 8.9 |
| | 7 | (S7) | 0 | 11.1 | 8.6 |
| | 8 | (S8) | 0 | 12.3 | 8.5 |
| | 9 | (S9) | 0 | 13.2 | 8.4 |
| | 10 | (S10) | 0 | 14.1 | 8.3 |
| | 11 | (S11) | 0 | 12.9 | 8.7 |
| | 12 | (S12) | 0 | 12.5 | 8.5 |
| | 13 | (S13) | 0 | 15.7 | 9.1 |
| | 14 | (S14) | 0 | 10.9 | 8.1 |
| | 15 | (S15) | 0 | 16.0 | 8.9 |
| | 16 | (S16) | 0 | 11.2 | 8.1 |
| | 17 | (S17) | 0 | 10.5 | 8.1 |
| | 18 | (S18) | 0 | 11.1 | 8.5 |
| Comparative Example | 1 | (Sx1) | 2.5 | 10.3 | 7.9 |

### [Applicability in Industry]

The sizing agent for fibers of the present invention is applicable in glass fiber, carbon fiber, aramid fiber, ceramic fiber, metal fiber, mineral fiber, rock fiber, or slug fiber. Furthermore, a prepreg can be obtained with a fiber bundle or fiber product produced by treatment with the sizing agent for fibers of the present invention as reinforcing fiber and with a thermoplastic or thermosetting resin as a matrix.

## Claims

1. A sizing agent for fibers, being an aqueous solution or an aqueous emulsion, comprising a polyester resin (A) that satisfies all the following conditions (i)-(iv) and an aqueous medium:
(i) that the polyester resin (A) is made from a dicarboxylic acid or its anhydride (a) and diols (b);
(ii) that at least one of the diols (b) is diol (b1) having an average of 4.5-60 contiguous oxyethylene groups;
(iii) that a weight percentage of the average of 4.5-60 contiguous oxyethylene groups in the polyester resin (A) is 25-50 wt%; and
(iv) that a mixture of 10 parts by weight of the polyester resin (A) and 90 parts by weight of water forms a uniform transparent solution or a uniform emulsion at 25°C.

2. The sizing agent for fibers according to claim 1, wherein the weight percentage of the diol (b1) having the average 4.5-60 contiguous oxyethylene groups in the diol (b) is 35 wt%-100 wt%.

3. The sizing agent for fibers according to claim 1, wherein the number average molecular weight of the polyester resin (A) is 2,000-50,000.

4. The sizing agent for fibers according to claim 1, wherein the diol (b1) is an adduct of bisphenol A and/or ethylene glycol with ethylene oxide.

5. The sizing agent for fibers according to claim 1, wherein a viscosity of the polyester resin (A) at 100°C is 0.5 Pa·s-50 Pa·s.

6. The sizing agent for fibers according to claim 1, further comprising an additional resin (B), being one or more selected from the group consisting of polyurethane resin, polyamide resin, epoxy resin, (meth)acrylate modified resin and unsaturated polyester resin.

7. The sizing agent for fibers according to claim 1, further comprising a surfactant (C), being one or more selected from the group consisting of nonionic surfactant, anionic surfactant, cationic surfactant and amphiprotic surfactant.

8. A fiber bundle, obtained by treating at least one fiber selected from the group consisting of glass fiber, carbon fiber, aramid fiber, ceramic fiber, metal fiber, mineral fiber, rock fiber, and slug fiber with the sizing agent for fibers according to any one of claims 1 to 7.

9. A fiber product, made from the fiber bundle according to claim 8.

10. A prepreg, formed by the fiber bundle according to claim 8 as a reinforcing fiber and a thermoplastic (B1) or thermosetting resin (B2) as a matrix.

11. A prepreg, formed with the fiber product according to claim 9 as a reinforcing fiber and a thermoplastic (B1) or thermosetting resin (B2) as a matrix.

12. A shaped body, made by shaping and hardening the prepreg according to claim 10 or 11.

## Patentansprüche

1. Schlichtemittel für Fasern, das eine wässerige Lösung oder eine wässerige Emulsion ist, umfassend ein Polyesterharz (A), das die folgenden Bedingungen (i)-(iv) erfüllt, und ein wässeriges Medium:
(i) dass das Polyesterharz (A) aus einer Dicarbonsäure oder deren Anhydrid (a) und Diolen (b) hergestellt ist;
(ii) dass wenigstens eines der Diole (b) ein Diol (b1) ist, das einen Durchschnitt von 4,5-60 zusammenhängenden Oxyethylengruppen aufweist;
(iii) dass ein Gewichtprozentsatz der durchschnittlich 4,5-60 zusammenhängenden Oxyethylengruppen in dem Polyesterharz (A) 25-50 Gew.-% ist; und
(iv) dass eine Mischung von 10 Gewichtsteilen des Polyesterharzes (A) und 90 Gewichtsteilen Wasser bei 25°C eine einheitliche transparente Lösung oder eine einheitliche Emulsion bilden.

2. Schlichtemittel für Fasern gemäß Anspruch 1, wobei der Gewichtsprozentsatz des Diols (b1) mit den durchschnittlich 4,5-60 zusammenhängenden Oxyethylengruppen in dem Diol (b) 35 Gew.-% - 100 Gew.-% ist.

3. Schlichtemittel für Fasern gemäß Anspruch 1, wobei das Molgewicht-Zahlenmittel des Polyesterharz (A) 2.000-50.000 ist.

4. Schlichtemittel für Fasern gemäß Anspruch 1, wobei das Diol (b1) ein Addukt von Bisphenol A und/oder Ethylenglykol mit Ethylenoxid ist.

5. Schlichtemittel für Fasern gemäß Anspruch 1, wobei eine Viskosität des Polyesterharzes (A) bei 100°C 0,5 Pa·s - 50 Pa·s ist.

6. Schlichtemittel für Fasern gemäß Anspruch 1, weiterhin umfassend ein zusätzliches Harz (B), das eines oder mehrere, ausgewählt aus der Gruppe, bestehend aus Polyurethanharz, Polyamidharz, Epoxidharz, (Meth)acrylat-modifiziertes Harz und ungesättigtes Polyesterharz ist.

7. Schlichtemittel für Fasern gemäß Anspruch 1, weiterhin umfassend ein Tensid (C), das eines oder mehrere, ausgewählt aus der Gruppe, bestehend aus nichtionischem Tensid, anionischem Tensid, kationischem Tensid und amphoteren Tensid ist.

8. Faserbündel, erhalten durch Behandeln wenigstens einer Faser, ausgewählt aus der Gruppe, bestehend aus Glasfaser, Kohlenstoffaser, Aramidfaser, Keramikfaser, Metallfaser, Mineralfaser, Gesteinsfaser und Slug-Faser mit dem Schlichtemittel für Fasern gemäß einem der Ansprüche 1 bis 7.

9. Faserprodukt, hergestellt aus dem Faserbündel gemäß Anspruch 8.

10. Prepreg, gebildet durch das Faserbündel gemäß Anspruch 8 als eine Verstärkungsfaser und ein Thermoplast (B1) oder ein wärmehärtendes Harz (B2) als eine Matrix.

11. Prepreg, gebildet durch das Faserprodukt gemäß Anspruch 9 als eine Verstärkungsfaser und ein Thermoplast (B1) oder ein wärmehärtendes Harz (B2) als eine Matrix.

12. Geformter Körper, hergestellt durch Formen und Härten des Prepreg gemäß Anspruch 10 oder 11.

## Revendications

1. Agent d'encollage pour fibres, étant une solution aqueuse ou une émulsion aqueuse, comprenant une résine de polyester (A) qui satisfait toutes les conditions suivantes (i)-(iv) et un milieu aquatique :
(i) que la résine de polyester (A) est fabriquée à partir d'un dicarboxylique ou son anhydride (a) et ses diols (b) ;
(ii) qu'au moins un des diols (b) est un diol (b1) possédant une moyenne comprise entre 4,5 et 60 de groupes polyéthylène contigus ;
(iii) qu'un pourcentage massique de la moyenne comprise entre 4,5 et 60 de groupes polyéthylène contigus dans la résine de polyester (A) est compris entre 25 et 50% en poids ; et
(iv) qu'un mélange de 10 parties en poids de la résine de polyester (A) et de 90 parties en poids d'eau forme une solution transparente uniforme ou une émulsion uniforme à 25°C.

2. Agent d'encollage pour fibres selon la revendication 1, dans lequel le pourcentage massique du diol (b1) possédant la moyenne comprise entre 4,5 et 60 de groupes polyéthylène contigus dans le diol (b) est compris entre 35 et 100% en poids.

3. Agent d'encollage pour fibres selon la revendication 1, dans lequel le poids moléculaire moyen en nombre de la résine de polyester (A) est compris entre 2 000 et 50 000.

4. Agent d'encollage pour fibres selon la revendication 1, dans lequel le diol (b1) est un adduit de bisphénol A et/ou d'éthylène glycol avec de l'oxyde d'éthylène.

5. Agent d'encollage pour fibres selon la revendication 1, dans lequel une viscosité de la résine de polyester (A) à 100°C est comprise entre 0,5 Pa.s et 500 Pa.s.

6. Agent d'encollage pour fibres selon la revendication 1, comprenant en outre une résine supplémentaire (B), étant une ou plusieurs choisie(s) dans le groupe constitué de la résine de polyuréthane, de la résine de polyamide, de la résine époxy, de la résine modifiée de méthacrylate et de la résine de polyester non saturée.

7. Agent d'encollage pour fibres selon la revendication 1, comprenant en outre un tensioactif (C), étant un ou plusieurs choisi(s) dans le groupe constitué de tensioactif non ionique, de tensioactif anionique, de tensioactif cationique et de tensioactif amphiprotique.

8. Faisceau de fibres, obtenu en traitement au moins une fibre choisie dans le groupe constitué de la fibre de verre, de la fibre de carbone, de la fibre d'aramide, de la fibre céramique, de la fibre de métal, de la fibre minérale, de la fibre de roche, et de la fibre de limace avec l'agent d'encollage pour fibres selon l'une quelconque des revendications 1 à 7.

9. Produit de fibres, fabriqué à partir du faisceau de fibres selon la revendication 8.

10. Produit pré-imprégné, formé par le faisceau de fibres selon la revendication 8 en tant qu'une fibre de renforcement et un thermoplastique (B1) ou une résine thermoplastique (B2) en tant que matrice.

11. Corps façonné, fabriqué en façonnant et durcissant le produit pré-imprégné selon la revendication 10 ou la revendication 11.

12. Corps façonné, fabriqué en façonnant et durcissant le produit pré-imprégné selon la revendication 10 ou la revendication 11.
